# EUROPÄISCHE PATENTSCHRIFT

(11) **EP 1 477 053 B1**
(45) Veröffentlichungstag und Bekanntmachung des Hinweises auf die Patenterteilung: **10.01.2007**
(21) Anmeldenummer: 04017745.3
(22) Anmeldetag: 26.07.2001
(51) Int. Cl.: A01C 11/00, B65G 47/244, A23N 15/00

(54) **Vorrichtung und Verfahren zur Entnahme von in Reihen in einem Pflanzaufsatz angeordneten Gemüse- oder Salatpflanzen.**
Device and method for extraction of a row of lettuce and vegetable plants from a plant attachment
Dispositif et prodédé pour l'extraction d'une rangée des plantes de légume et de laitue d'une grille de plantes

(30) Priorität: 26.07.2000 DE 10036403; 20.11.2000 DE 10057445
(43) Veröffentlichungstag der Anmeldung: 17.11.2004
(62) Teilanmeldung aus: 01118158.3
(73) Patentinhaber: Daas, Kamal, Tira Triengle 44915 (IL)
(72) Erfinder: Daas, Kamal, Tira Triengle 44915 (IL)
(74) Vertreter: Laufhütte, Dieter

(56) Entgegenhaltungen:
- EP-A- 0 373 872
- EP-A- 0 457 679
- US-A- 4 893 571
- US-A- 5 365 693

## Beschreibung

Die Erfindung betrifft eine Vorrichtung zur Entnahme von in Reihen in einem Pflanzaufsatz angeordneten Gemüse- und Salatpflanzen nach dem Oberbegriff des Anspruchs 1.

Gemüse- bzw. Salatpflanzen, z.B. Chicorée oder Endiviensalat, müssen aus der Erde bzw. dem Feld geerntet werden und zur Weiterverarbeitung von ihren Wurzeln getrennt werden. Dazu müssen die Pflanzen einzeln aufgenommen werden und die Wurzeln abgeschnitten werden, bevor die Köpfe z.B. verpackt und zum Vertrieb vorbereitet werden. Die einzelnen Pflanzen müssen ggf. von Hand zerschnitten werden, was einen hohen Arbeitsaufwand und eine zeitraubende Verarbeitung bedeutet. Bei jedem manuellen oder maschinellen Schneidvorgang besteht zudem die Gefahr, daß Wurzelteile an dem Kopf zurückbleiben oder verwertbares Material des Kopfes mit der Wurzel abgeschnitten werden.

Bereits aus der EP-A1-0373872 ist eine Vorrichtung mit den Merkmalen des Oberbegriffs des Anspruchs 1 bekannt.

Aufgabe der vorliegenden Erfindung ist es, Vorrichtungen und Verfahren zur Verfügung zu stellen, die das Entnehmen bzw. Ernten der Gemüse- bzw. Salatpflanzen vereinfachen.

Die Aufgabe wird durch eine Vorrichtung mit den Merkmalen des Anspruches 1 gelöst.

Die erfindungsgemäße Vorrichtung zum Entnehmen von Gemüse- bzw. Salatpflanzen aus einer Pflanzeinrichtung weist eine Schraubeneinrichtung auf, die eine Anzahl von drehbar antreibbaren Schrauben trägt, die in etwa der Anzahl der in einer Reihe der Pflanzeinrichtung aufnehmbaren Pflanzen entspricht. An einer beweglichen Aufhängung ist diese Schraubeneinrichtung räumlich bewegbar gelagert. Die Schraubeneinrichtung und die Aufhängung sind derart ausgestaltet, daß die Schrauben der Schraubeneinrichtung in die Pflanzen getrieben werden können, die sich in einer Pflanzeinrichtung auf einer Halterung in der erfindungsgemäßen Vorrichtung befinden. Die Entnahmevorrichtung weist zusätzlich zwei gegenläufig angetriebene Endlos-Aufnahmebänder zum Weitertransport der Pflanzen auf, die derart angeordnet sind, dass sie eine Reihe von Pflanzen, die von der Schraubeneinrichtung getragen werden, von dieser übernehmen können, wobei die bewegliche Aufhängung derart ausgestaltet ist, dass sie die Schraubeneinrichtung von dem Bereich der Vorrichtung, in dem die Pflanzen aus dem Pflanzaufsatz übernommen werden, zu den Aufnahmebändern transportieren kann.

Mit einer solchen erfindungsgemäßen Entnahmevorrichtung ist auf sehr einfache Weise jeweils eine Reihe von Pflanzen aus einer Pflanzeinrichtung zu entnehmen. Die Schrauben werden in die einzelnen Pflanzen eingeschraubt und sichern so einen sicheren Transport. Mit der beweglichen Aufhängung werden die Schrauben zusammen mit den Pflanzen nach oben bewegt und so aus der Pflanzeinrichtung herausgenommen. Vorteilhafterweise wird eine erfindungsgemäße Pflanzeinrichtung eingesetzt. Es können aber auch andere Pflanzeinrichtungen verwendet werden, z. B. Pflanzeinrichtungen, deren Pflanzaufsatz einzelne, vorzugsweise vierekkige Pflanzzellen aufweist.

Die Pflanzeinrichtung kann dabei flexibel gestaltet sein, um das Entnehmen weiter zu vereinfachen. Die bewegliche Aufhängung bewegt die Schrauben zusammen mit den Pflanzen zum Beispiel zu einer Abtransporteinrichtung. Eine solche Abtransporteinrichtung kann bei einer vorteilhaften Weiterbildung zum Beispiel aus Endlosaufnahmebändern bestehen, die derart gegenläufig angetrieben werden, daß sie sich in dem Bereich, in welchem sie die Pflanzen erfassen, in die gleiche Richtung bewegen. Zwischen diese Aufnahmebänder werden die Pflanzen mit Hilfe der beweglichen Aufhängung der erfindungsgemäßen Ausgestaltung der Entnahmevorrichtung eingeführt und durch die Bewegung der Transportbänder abtransportiert.

Bei dieser Ausgestaltung der erfindungsgemäßen Entnahmevorrichtung kann die Halterung für den Pflanzaufsatz einer Pflanzeinrichtung beweglich gelagert sein. Auf diese Weise kann nach Entnahme einer Reihe und Weitergabe an die Aufnahmebänder die Halterung um eine Reihe weiter verschoben werden, so daß die Schraubeneinrichtung die Schrauben in die nächste Reihe treiben kann. Ebenso kann natürlich vorgesehen sein, daß die Aufhängung derart beweglich gelagert ist, daß sie über einen Pflanzaufsatz bewegt werden kann, der sich auf der Halterung befindet.

Wird ein flexibler Pflanzaufsatz eingesetzt, kann die Halterung wiederum wie bei der ersten Ausgestaltung derart sein, daß der flexible Pflanzaufsatz unter Spannung gehalten werden kann, um die Aufnahmen für die Pflanzen zur leichteren Entnahme aufzuweiten.

Die Schrauben können z.B. von oben in die Pflanze getrieben werden. Besonders vorteilhaft ist es jedoch, wenn die Schrauben schräg in die Pflanzen eingebracht werden, um sie aus der Pflanzeinrichtung zu entnehmen. Auf diese Weise wird verhindert, daß sich die Pflanzen beim Einschrauben mitdrehen.

Um die Pflanze selbst möglichst unverletzt zu lassen, sind die Schrauben vorteilhafterweise so angeordnet, daß sie im Wurzelbereich ansetzen.

Besonders vorteilhaft läßt sich die erfindungsgemäße Vorrichtung mit einer Ausrichtvorrichtung zu einem System kombinieren, das eine Vorrichtung zum Entnehmen von Gemüse- bzw. Salatpflanzen z. B. aus einer Pflanzeinrichtung mit einer Ausrichtvorrichtung kombiniert und Gegenstand des Anspruchs 3 ist. Ein entsprechendes Verfahren ist Gegenstand des Anspruchs 4.

Die Erfindung wird anhand der anliegenden Figuren im Detail erläutert. Dabei zeigt
- Fig. 1: eine schematische Draufsicht auf eine Ausrichtvorrichtung,
- Fig. 2: eine schematische Seitenansicht einer Ausrichtvorrichtung,
- Fig. 3: eine mit der Vorrichtung ausgerichtete Pflanze in Transportrichtung gesehen,
- Fig. 4: eine solche Pflanze kurz vor dem Abtrennvorgang der Wurzel,
- Fig. 5: eine Pflanzeinrichtung in schematischer Seitenschnittansicht,
- Fig. 6: eine erfindungsgemäße Pflanzeinrichtung in schematischer Draufsicht,
- Fig. 7: Eine Pflanzeinrichtung vor der Entnahme der Pflanzen,
- Fig. 8: ein erstes erfindungsgemäßes System zur Entnahme von Pflanzen aus einer Pflanzeinrichtung und zur Übergabe an eine erste Ausführungsform einer Ausrichtvorrichtung, in schematischer Ansicht während des Betriebes,
- Fig. 9: ein zweites erfindungsgemäßes System zur Entnahme von Pflanzen aus einer Pflanzeinrichtung und zur Übergabe an eine erste Ausführungsform einer Ausrichtvorrichtung in schematischer Ansicht,
- Fig. 10: ein Detail des erfindungsgemäßem Systemes der Fig. 9, eine erfindungsgemäße Entnahmevorrichtung schematisch darstellend, und
- Fig. 11: ein weiteres erfindungsgemäßes System zur Entnahme von Pflanzen aus einer Pflanzeinrichtung und zur Übergabe an eine weitere Ausführungsform einer Ausrichtvorrichtung in schematischer Ansicht.

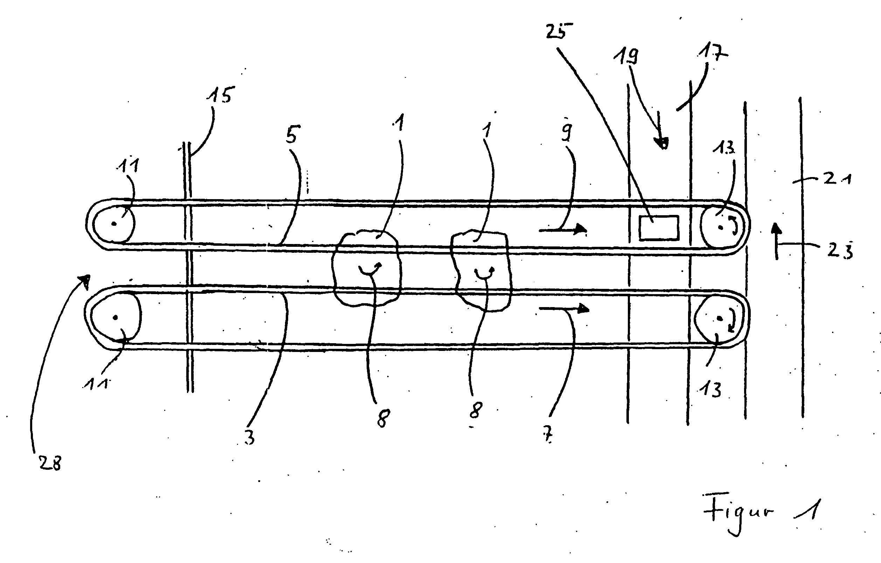

In Fig. 1 sind Endlosbänder 3 bzw. 5 gezeigt, die sich in der Richtung 7 bzw. 9 bewegen. Das Endlosband 3 wird mit einer größeren Geschwindigkeit in Rotation versetzt als das Endlosband 5, so daß sich die schematisch angedeuteten Salat- bzw. Gemüsepflanzen 1 um ihre eigene senkrechte Achse in Richtung 8 drehen. Dabei sind nur zwei Pflanzen 1 schematisch angedeutet. In Betrieb befinden sich mehrere Pflanzen nebeneinander in der Transportrichtung 7, 9 zwischen den Bändern 3, 5.

Der Abstand der Transportbänder 3, 5 ist dabei so eingestellt, daß er in etwa der Dicke des Verbindungsbereiches zwischen Kopf und Wurzel der Pflanze entspricht. Dazu sind die Transportbänder 3 und 5 zueinander verschieblich angeordnet. Die Oberfläche der Transportbänder 3, 5 ist gegebenenfalls ausreichend rauh ausgestaltet, damit die Pflanzen 1 sicher erfaßt, transportiert und rotiert werden. Der Abstand der Bänder ist etwa auf die seitliche Ausdehnung der Pflanzen eingestellt, wobei die Bänder flexibel sind, um die Pflanzen fest zu halten. 11 und 13 deuten die Umlenkrollen für die Transportbänder 3 und 5 an, wobei entweder die Rollen 11 oder die Rollen 13 angetrieben sind.

Mit 15 ist eine Stange bezeichnet, die unterhalb der Transportbänder 3 und 5 angeordnet ist und zwar in einer Höhe, daß eine normale zu transportierende Pflanze mit ihrer Wurzel an diesem Hindernis hängenbleibt. 25 bezeichnet eine Schneideinrichtung, die im Endbereich des Transportbereiches der Bänder 3 und 5 derart angeordnet ist, daß eine Klinge direkt am Verbindungsbereich zwischen Kopf und Wurzel der Pflanze 1 entweder direkt oberhalb oder direkt unterhalb der Transportbänder angreifen kann. Die Wurzel fällt auf ein Förderband 17 und wird in Richtung 19 abtransportiert, während der Kopf auf ein Förderband 21 fällt und in Richtung 23 abtransportiert wird.

28 bezeichnet den Einlaufbereich zwischen die Transportbänder 3 und 5.

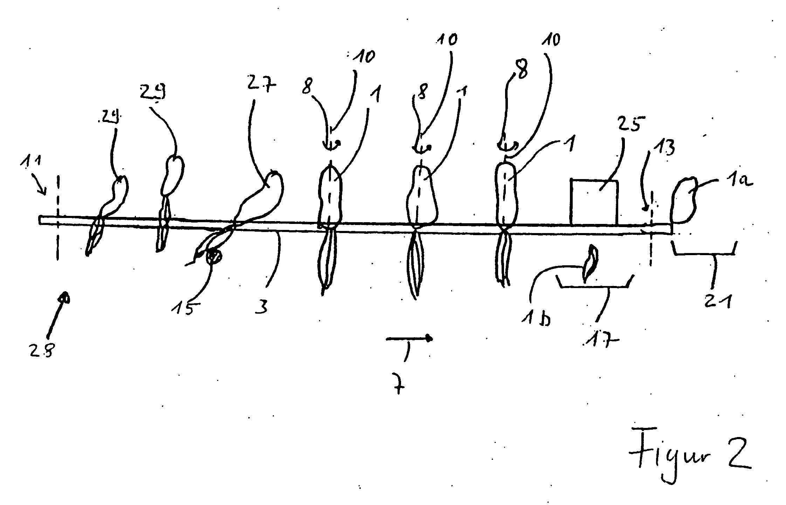

In Fig. 2 ist die gleiche Ausführungsform schematisch von der Seite gezeigt. 10 bezeichnet die Rotationsachse, um die die ausgerichteten Pflanzen 1 durch die unterschiedliche Geschwindigkeit der Transportbänder 3, 5 gedreht werden. Mit 29 sind Pflanzen gezeigt, die in zufälliger Ausrichtung zwischen die Transportbänder gelangt sind, wobei weder die Raumausrichtung noch die Höhenlage definiert sind. 27 zeigt eine Pflanze, die mit ihrer Wurzel an das Hindernis 15 anstößt und so in Schräglage versetzt wird. Weiterhin sind in Fig. 2 die Rotationsachsen der Umlenkrollen 11 und 13 sichtbar. Schließlich zeigt im Endbereich der Transportbänder die Ziffer 1 a einen abgetrennten Kopf, während er auf das Förderband 21 fällt, und 1 b die abgetrennte Wurzel, die von dem Förderband 17 abtransportiert wird.

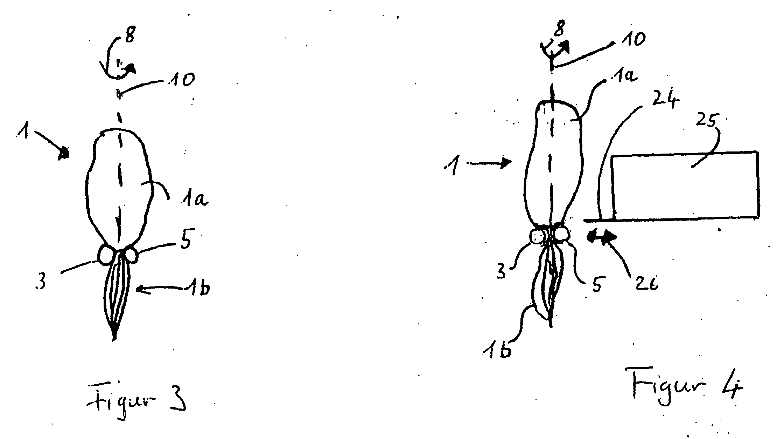

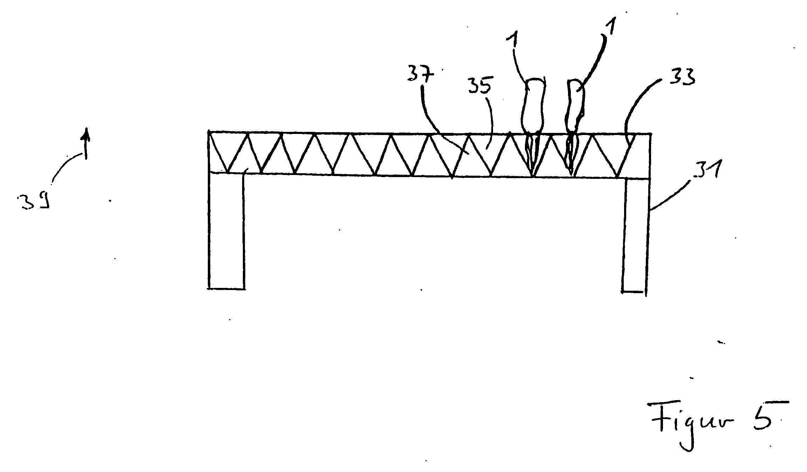

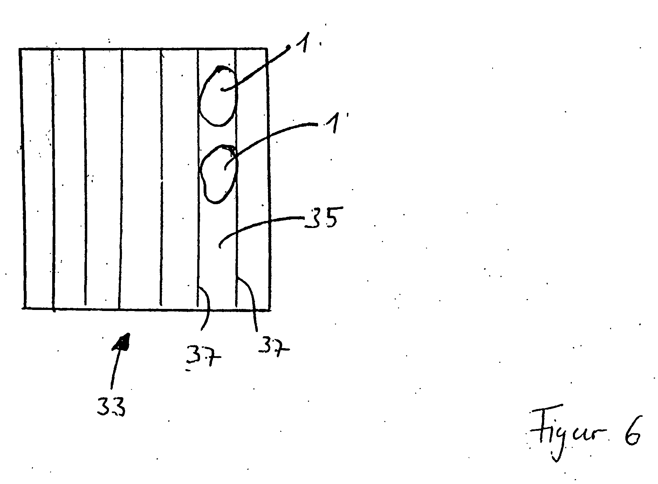

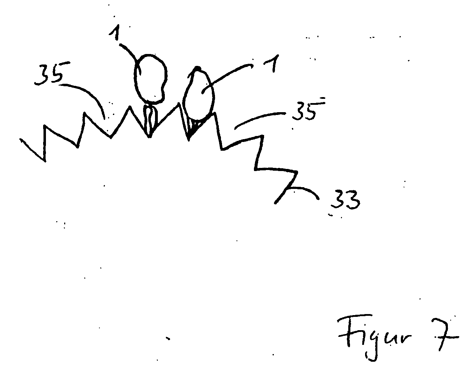

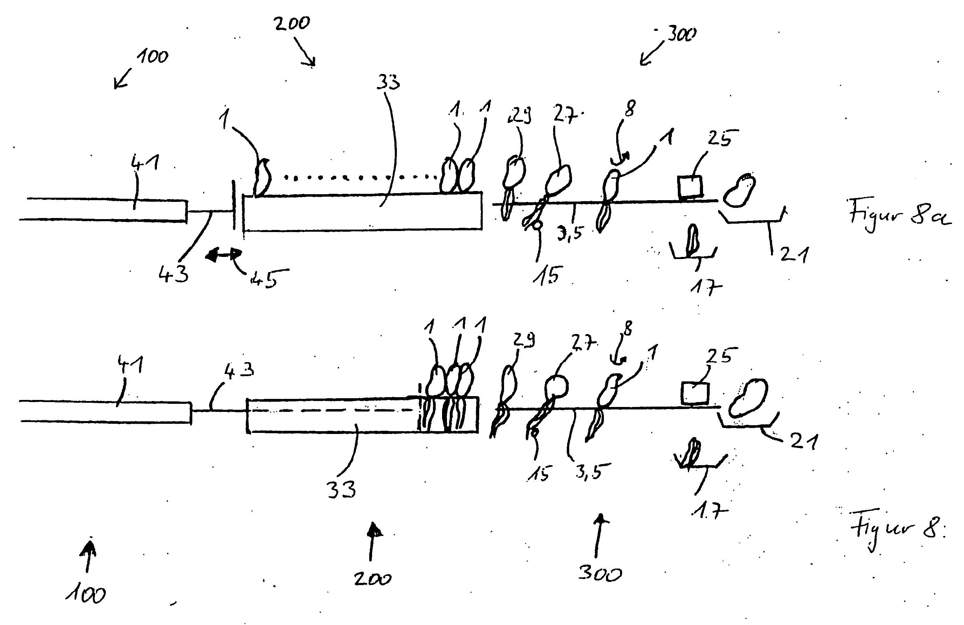

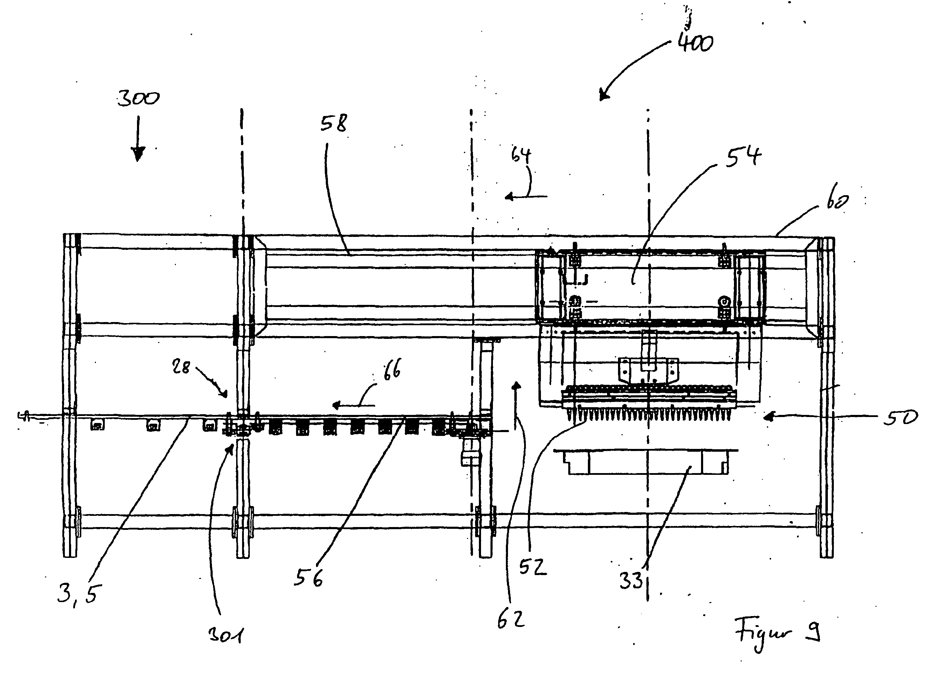

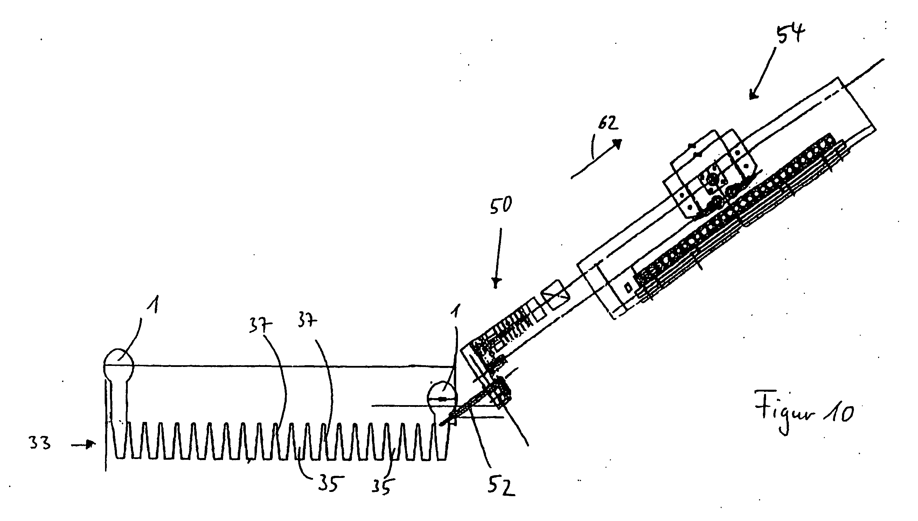

Fig. 3 zeigt eine Pflanze 1, die um ihre Achse 10 in Rotation versetzt ist, wobei die Blickrichtung entlang der Transportrichtung durch die Transportbänder 3 und 5 ist.

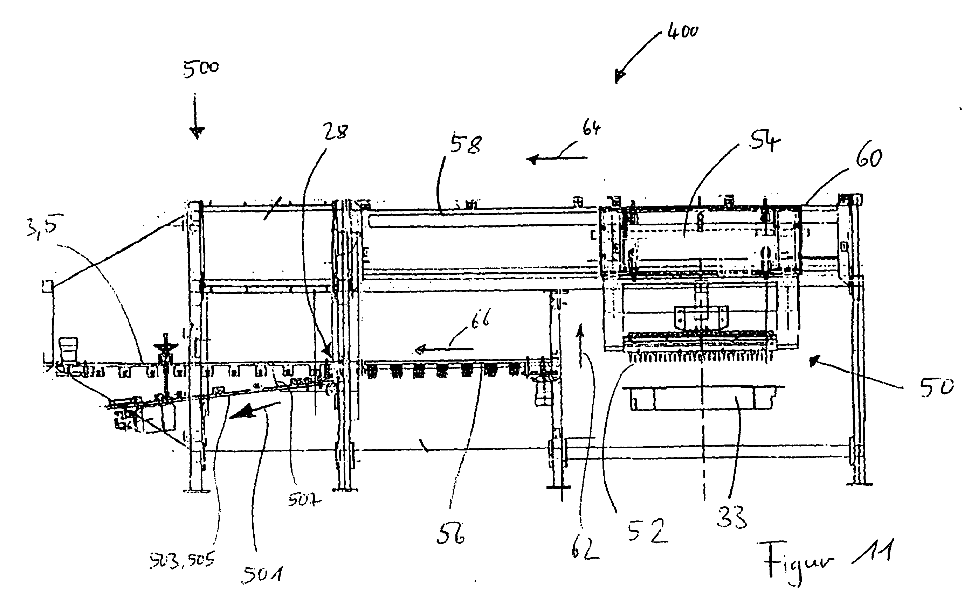

Fig. 4 zeigt dieselbe Pflanze kurz bevor der Kopf 1a von der Wurzel 1 b abgetrennt wird. Die Pflanze befindet sich zwischen den Transportbändern 3 und 5 im Bereich der Schneideinrichtung 25. Diese weist eine Klinge 24 auf, die in der Richtung 26 bewegbar ist, um den Kopf 1a von der Wurzel 1 b abzutrennen. Dazu ist eine nicht gezeigte Steuerung vorgesehen, die die Schneideinrichtung in einem entsprechenden Takt bewegt. Alternativ kann z.B. eine rotierende Klinge vorgesehen sein oder mehrere Klingen, die sternförmig angeordnet sind und rotieren, um die Köpfe 1a jeweils von den Wurzeln 1 b abzutrennen.

Fig. 5 zeigt eine Schnittansicht von der Seite einer erfindungsgemäßen Pflanzeinrichtung. Sichtbar ist das Gestell 31, in dem sich ein zickzackförmig gebogenes Metall 33 befindet. Schematisch angedeutet ist die Lage von eingepflanzten Pflanzen 1, die mit ihren Wurzeln in die Täler 35 zwischen den Bergen 37 des gebogenen Metalls 33 reichen. In den Tälern 35 ist die Erde anzuordnen, in die die Wurzel der Pflanzen 1 ragt. Abweichend hiervon kann anstelle der Erde auch vorgesehen sein, daß der Pflanzaufsatz eine Nährlösung oder Wasser enthält oder davon durchströmt wird. Das gebogene Metall 33 läßt sich in Richtung 39 von dem Gestell 31 entfernen, so daß die Stirnseiten der Täler 35 freiliegen können.

Fig. 6 zeigt eine schematische Draufsicht auf die erfindungsgemäße Vorrichtung mit den angedeuteten Tälern 35, in denen sich die Pflanzen 1 befinden. Als Linien angedeutet sind die Berge 37 zwischen den Tälern 35.

Abweichend von der gezeigten Ausführungsform kann das Metall auch wellenförmig gebogen sein, ohne daß scharfe Zickzackkanten vorliegen.

Fig. 7 zeigt ein Metall 33 vor dem Entnahmevorgang. Das Metall 33 ist biegsam ausgestaltet, so daß, wie in Fig. 7 angedeutet, eine Aufweitung der Täler 35 durch Biegen des Metalls möglich ist.

Der Übersichtlichkeit halber wurde in keiner der Figuren, im speziellen auch nicht in den Figuren 5 bis 7, Erde bzw. Dünger gezeigt, in dem die Pflanzen wachsen und der sich ggf. in den Tälern 35 befindet.

Fig. 8a zeigt den Einsatz einer Ausrichtvorrichtung 300 bei der Aufnahme von Pflanzen aus einer erfindungsgemäßen Pflanzeinrichtung 200. Weiterhin zeigt Fig. 8a eine Schubeinrichtung 41 mit einem Kolben 43, der in Richtung 45 verschoben werden kann, um die Pflanzen 1 aus der Pflanzeinrichtung 200 zu der Ausrichtvorrichtung 300 herauszuschieben. Die Schubeinrichtung ist mit 100 bezeichnet.

Fig. 8b zeigt den Ausschiebevorgang in einem fortgeschrittenen Stadium mit ausgefahrenem Kolben 43.

Gezeigt ist eine Ausführungsform mit einem Kolben 43 zum Herausschieben einer Reihe von Pflanzen 1 aus einem Tal 35 eines Pflanzaufsatzes 33. In analoger Weise können mehrere Kolben 43 nebeneinander vorgesehen sein, um die Pflanzen einer entsprechenden Anzahl von nebeneinander befindlichen Tälern 35 in einem Pflanzaufsatz 33 gleichzeitig zu entleeren. Gegebenenfalls ist eine entsprechende Anzahl von Ausrichtvorrichtungen 300 in paralleler Anordnung vorzusehen.

Die Funktionsweise der Ausführungsformen wird im folgenden am Beispiel eines Systems aus Ausrichtvorrichtung 300, Pflanzeinrichtung 200 und Schubvorrichtung 100 erläutert.

Die Pflanzen, z.B. Chicorée- oder Endiviensalatpflanzen werden in eine Pflanzeinrichtung gesetzt, wobei ihre Ausrichtung so ist, daß die Wurzeln in die Täler 35 des Metallgestells 33 wachsen, in denen sich entsprechende Erde und/oder Dünger befinden kann.

Nachdem die Pflanzen ausgewachsen sind, entsteht der Zustand, wie er in Fig. 5 durch die zwei beispielhaft angedeuteten Pflanzen 1 gezeigt ist.

Der Pflanzaufsatz 33 wird mit ausgewachsenen Pflanzen 1 in Richtung 39 von dem Gestell 31 abgehoben.

Bei Bedarf kann das Blech 33 in der in Fig. 7 gezeigten Art gebogen werden, um ggf. vorhandene Erde in den Tälern 35 von den Bergen 37 zu lösen.

Das Metall 33 wird vor die Schubeinrichtung 100 gebracht.

Die Schubeinrichtung kann einen oder mehrere Kolben 43 umfassen, die in benachbarte Täler 35 des Pflanzaufsatzes 33 eingreifen können, um die Pflanzen 1 entlang der Täler 35 in Richtung 45 aus den Tälern 35 herauszuschieben. Der Kolben 43 wird bewegt und schiebt, wie es in Fig. 8a und Fig. 8b sichtbar ist, die Pflanzen aus den Tälern 35 des Pflanzaufsatzes 33 heraus. Die Pflanzen fallen zwischen die Transportbänder 3 und 5 der Ausrichtvorrichtung 300. Dabei haben sie eine unregelmäßige Ausrichtung, sowohl in der Höhe als auch in der Raumausrichtung, wie es die Pflanze 29 in den Figuren 8a und 8b symbolisieren soll.

Ist der Pflanzaufsatz 33 aus flexiblem Material gefertigt, so kann der Pflanzaufsatz auch in auseinandergebogenem Zustand, wie es in Fig. 7 sichtbar ist, vor eine Schubeinrichtung 100 gebracht werden, die entsprechend versetzt angeordnete Kolben 43 hat, um die Pflanzen 1 auf entsprechend angeordnete Ausrichtvorrichtungen 300 zu schieben.

Von den Transportbändern 3 und 5 werden die Pflanzen weiterbewegt, bis sie mit ihrer Wurzel 1 b an das Hindernis 15 anstoßen, wie es die Pflanze 27 in den Figuren 8a und 8b bzw. der Fig. 2 symbolisiert. Durch die höhere Geschwindigkeit des Bandes 3 mit Bezug zu dem Band 5 werden die Pflanzen in Rotation 8 versetzt. Diese Rotation durch die rauhen Bänder 3, 5 begünstigt die senkrechte Ausrichtung der Pflanzen um die Achse 10. Weiterhin wird sich die Pflanze derart bewegen, daß ihr schmalster Bereich, in der Regel der Verbindungsbereich zwischen Kopf 1a und Wurzel 1 b sich zwischen den Transportbändern 3 und 5 befindet. Auf diese Weise haben alle Pflanzen 1 nach dem Transport durch die Transportbänder 3, 5 in etwa die gleiche Ausrichtung und Raumhöhe. Am Ende der Bänder 3, 5 befindet sich die Schneideinrichtung 25, die dann in definierter Weise den Verbindungsbereich zwischen Kopf 1a und Wurzel 1b durchtrennen kann, der sich für alle Pflanzen in der gleichen Höhe befindet. Der Kopf fällt auf das Band 21 und wird in Richtung 23 abtransportiert, während die Wurzel auf das Band 17 fällt und in Richtung 19 abtransportiert wird.

Ist nur eine Schubeinrichtung 41 mit nur einem Kolben 43 vorgesehen, so wird im folgenden der Pflanzaufsatz 33 nach dem Zurückziehen des Kolbens 43 derart verschoben, daß der Kolben in das benachbarte Tal des soeben entleerten Tales 35 eingreifen kann. Nun wiederholt sich der Ausschiebe- und Ausrichtvorgang entsprechend.

In Fig. 9 ist eine andere erfindungsgemäße Ausführungsform gezeigt. Dieses System weist keine Entnahmevorrichtung mit einer Schiebeeinrichtung auf. 33 bezeichnet wiederum einen erfindungsgemäßen Pflanzaufsatz. 50 bezeichnet eine Schraubeneinrichtung, die an einer Aufhängung 54 befestigt ist. Die Schraubeneinrichtung umfasst einzelne Schrauben 52, die, z.B. von einer nicht gezeigten Steuerung angesteuert, in Drehung versetzt werden können. Die Aufhängung 54 ist auf einer Schieneneinrichtung 58 verschiebbar gelagert. Außerdem umfasst die Aufhängung 54 einen Mechanismus, mit dessen Hilfe die Schraubeinrichtung 50 in Richtung 62 hochgezogen werden kann. Die spezielle Ausgestaltung dieser Einrichtung zum Hochziehen ist in der Fig. 9 der Übersichtlichkeit halber nicht dargestellt und kann z.B. mechanisch realisiert werden.

Die Aufhängung 54 mit der Schieneneinrichtung 58 ist in einem Gestell 60 befestigt. Die Bewegung der Schraubeinrichtung 52 in Richtung der Schieneneinrichtung 58 ist mit 62 bezeichnet. Eine translatorische Bewegung entlang der Schieneneinrichtung 58 ist mit 64 bezeichnet.

66 bezeichnet die Bewegungsrichtung von Endlos-Aufnahmebändern 56. Die Endlosaufnahmebänder 56 haben einen derartigen Abstand, daß sie die zu transportierenden Pflanzen zwischen sich aufnehmen können und sicher weitertransportieren. Sie werden in einen Übergabebereich 301 transportiert, in dem die Pflanzen in einen Einlaufbereich 28 einer erfindungsgemäßen Ausrichtvorrichtung 300 an die Transportbänder 3 bzw. 5 übergeben werden können. Die Gesamtheit der Aufhängevorrichtung 54 mit der Schraubeinrichtung 52 und den angetriebenen Aufnahmebändern 66 in dem Gestell 60 stellt die Entnahmevorrichtung 400 gemäß dieser Ausführungsform dar.

In Fig. 10 ist eine Ansicht gezeigt, in der die Schraubeinrichtung 50 in der Aufhängung 54 sichtbar ist. Deutlich erkennbar ist, daß die Anordnung der Schraubeinrichtung 50 und der Aufhängung 54 schräg ist, so daß die Schrauben 52 ebenfalls unter einem Winkel angeordnet sind. In Fig. 10 ist weiterhin ein Pflanzaufsatz 33 mit den bereits beschriebenen Tälern 35 und Bergen 37 gezeigt, in denen sich eingepflanzte Salat- bzw. Gemüsepflanzen 1 befinden. Die Lage der Schrauben 52 mit Bezug zu dem Pflanzaufsatz 33 ist derart, daß die Schrauben in der Regel den Wurzelbereich der Pflanzen 1 treffen, wenn sie seitlich schräg in die Pflanzen eingeschraubt werden.

Die Funktionsweise dieser Anordnung ist wie folgt:

Die Pflanzen werden wiederum in einer Pflanzeinrichtung gesetzt, so daß nach dem Auswachsen der Pflanzen ein Zustand entsteht, wie er in Fig. 5 angedeutet ist und bereits oben beschrieben wurde. Der Pflanzaufsatz 33 wird mit den ausgewachsenen Pflanzen 1 in Richtung 39 von dem Gestell 31 abgehoben. Wiederum kann bei Bedarf das Blech 33 der in Fig. 7 gezeigten Art gebogen werden, um ggf. vorhandene Erde in den Tälern 35 von den Bergen 37 zu lösen.

Das Metall 33 wird in die erfindungsgemäße Ausgestaltung 400 der Entnahmevorrichtung gemäß der Fig. 9 eingebracht. Dazu wird es auf einer Halterung gelagert, die in Fig. 9 der Übersichtlichkeit halber nicht gezeigt ist.

Wie es in Fig. 10 erkennbar ist, werden die Schrauben 52 in eine Reihe der Pflanzen 1 eingeschraubt. Die Reihe der Schrauben ist dabei derart angeordnet, daß in der Regel jede Pflanze von einer Schraube getroffen wird.

Bei der gezeigten Ausführungsform treffen die Schrauben gleichzeitig auf eine Reihe von Pflanzen 1, die sich in einem Tal 35 befinden. Abweichend hiervon kann natürlich auch der Pflanzaufsatz 33 um 90° versetzt aufgebracht werden, so daß immer eine Pflanze 1 aus jedem Tal 35 von einer Schraube getroffen wird.

Nachdem die Schraube 52 in den Wurzelbereich der Pflanze 1 eingeschraubt wurden, wird mit Hilfe einer Steuerung ein Signal gegeben, das die Schrauben in Richtung 62 wegzieht. In Fig. 10 ist erkennbar, daß diese Bewegung schräg nach oben führt. Die Pflanzen werden auf diese Weise aus den Tälern 35 herausgezogen. Nachdem sie vollständig herausgezogen worden sind, bewegt sich die Aufhängung 54 in Richtung 64 entlang der Schieneneinrichtung 58. Dabei treten die einzelnen Pflanzen 1 zwischen die Endlosbänder 56, die für einen Transport der aufgenommenen Pflanzen in Richtung 66 sorgen.

Eine solche erfindungsgemäße Entnahmevorrichtung 400 kann ebenso mit einem anders ausgestalteten Pflanzaufsatz verwendet werden, der z. B. viereckige Pflanzaufnahmen aufweist.

Sind die Pflanzen 1 einer Reihe, die sich an der Schraubeinrichtung 50 befindet, zwischen die Aufnahmebänder 56 geführt, so werden durch eine Schraubbewegung der Schrauben 52 in entgegengesetzter Richtung die Schrauben aus den Pflanzen 1 herausgedreht, so daß ein ungehinderter Transport der Pflanzen in Richtung 66 möglich ist. Es kann auch vorgesehen sein, daß die Endlos-Aufnahmebänder 56 erst in diesem Moment seitlich an die Pflanzen 1 herangebracht werden. Dazu muß eine nicht gezeigte Steuerung ein entsprechendes Signal abgeben, wenn die Aufhängung 54 vollständig oberhalb des Bereiches der Aufnahmebänder 56 angelangt ist.

Im Übergabebereich 301 verlassen die Pflanzen 1 die Aufnahmebänder 56 und treten in den Einlaufbereich 28 der Ausrichtvorrichtung 300 ein, die mit Bezug zu den Figuren 1 bis 4 bereits erläutert wurde.

Die weitere Funktion der Ausrichtvorrichtung entspricht der bereits beschriebenen Ausführungsform.

Figur 11 zeigt eine weitere Ausführungsform eines erfindungsgemäßen Systems mit einer weiteren Ausführungsform einer erfindungsgemäßen Ausrichtvorrichtung 500. Die Entnahmevorrichtung 400 der Figur 11 entspricht dabei der Entnahmevorrichtung 400 der Figur 9.

Während bei Figur 9 die bereits beschriebene Ausrichtvorrichtung 300 eingesetzt wird, wird bei der Ausführungsform der Figur 11 eine andere Ausführungsform 500 der Ausrichtvorrichtung eingesetzt. Die Ausführungsform 500 umfaßt Ausrichtbänder 503, 505, die vom Einlaufbereich 28 unter einem Winkel 507 schräg nach unten führen. Die Ausrichtbänder 503, 505 sind als umlaufende Endlosbänder ausgestaltet, die sich gleichsinnig mit den darüber befindlichen Transportbändern 3, 5 bewegen. Der Winkel 507 wird dabei so gewählt, daß der maximale Abstand der Ausrichtbänder 503, 505 von den Transportbändern 3, 5 in etwa dem Ausmaß der Wurzel 1 b einer zu behandelnden Gemüse- bzw. Salatpflanze 1 entspricht. Tritt nun eine Gemüse- bzw. Salatpflanze 1 in den Einlaufbereich 28 der Ausrichtvorrichtung 500 ein, so wird sie in bereits beschriebener Weise von den Transportbändern 3, 5 erfaßt und fortbewegt. Die Ausrichtbänder 503, 505 erfassen den Wurzelbereich 1b der Pflanze zwischen sich. Durch die Bewegung der Ausrichtbänder schräg nach unten wird die Ausrichtung der Gemüse- bzw. Salatpflanzen unterstützt. Die Wurzel wird entlang der Bewegung nach unten gezogen und richtet die Pflanze somit aus.

Selbstverständlich kann diese Ausführungsform 500 der Ausrichtvorrichtung auch mit anderen Ausführungsformen erfindungsgemäßer Entnahmevorrichtungen 100, 200 verwendet werden, wie sie mit Bezug zu Figur 8 erläutert sind.

Diese Vorrichtung ermöglicht also eine einfache und sichere Ausrichtung der Pflanzen, die z.B. ein definiertes Abschneiden des Kopfes von den Wurzeln auf einfache Weise ermöglicht. Mit dieser Vorrichtung werden die Pflanzen derart ausgerichtet, daß sie immer mit demselben Bereich in derselben Höhe zwischen die Schneidvorrichtung gelangen.

Weiterhin ist mit einer Ausführungsform ein einfaches Ausschieben der ausgewachsenen Pflanzen aus der Pflanzeinrichtung möglich, die vorteilhaft mit der Ausrichtvorrichtung kombiniert werden kann. Mit einer anderen Ausführungsform ist ein einfaches Herausheben der ausgewachsenen Pflanzen aus der Pflanzeinrichtung in sicherer Weise möglich, die ebenfalls mit der Ausrichtvorrichtung kombiniert werden kann.

Insgesamt wird der Erntevorgang und der Weiterverarbeitungsvorgang durch Abschneiden der Wurzel stark vereinfacht und beschleunigt.

## Patentansprüche

1. Vorrichtung zur Entnahme von in Reihen in einem Pflanzaufsatz (33) angeordneten Gemüse- oder Salatpflanzen mit einem Kopf- (1a) und einem Wurzelbereich (1b) mit
- einer Halterung für den Pflanzaufsatz (33),
- einer Schraubeneinrichtung (50) mit einer Anzahl von drehbar antreibbaren Schrauben (52), die in etwa der Anzahl der in einer Reihe des Pflanzaufsatzes (33) aufnehmbaren Pflanzen (1) entspricht,
- einer beweglichen Aufhängung (54) für die Schraubeneinrichtung (50) zu deren räumlicher Bewegung,
wobei die Schraubeneinrichtung (50) und die Aufhängung (54) derart ausgestaltet sind, dass die Schrauben (52) der Schraubeneinrichtung (50) in eine Reihe an Pflanzen (1) getrieben werden können, die sich in einem Pflanzaufsatz (33) auf der Halterung befinden,
**gekennzeichnet durch**
zwei gegenläufig angetriebenen Endlos-Aufnahmebändern (56) zum Weitertransport der Pflanzen (1) zwischen sich, die derart angeordnet sind, dass sie eine Reihe von Pflanzen (1), die von der Schraubeneinrichtung (50) getragen werden, von dieser übernehmen können, wobei die bewegliche Aufhängung (54) derart ausgestaltet ist, dass sie die Schraubeneinrichtung (50) von dem Bereich der Vorrichtung, in dem die Pflanzen aus einem Pflanzaufsatz (33) übernommen werden, zu den Aufnahmebändern (56) transportieren kann.

2. Vorrichtung nach Anspruch 1, bei der die Schraubeneinrichtung (50) derart ausgestaltet ist, dass die Schrauben (52) schräg in die Pflanzen, vorzugsweise in deren Wurzelbereich, getrieben werden können.

3. System zum Ernten von Gemüse- oder Salatpflanzen (1) mit einem Kopf- (1a) und einem Wurzelbereich (1 b), eine Entnahmevorrichtung (400) nach einem der Ansprüche 1 oder 2 umfassend, wobei eine Vorrichtung (300, 500) derart bezüglich der Entnahmevorrichtung (400) angeordnet ist, dass mit Hilfe der Entnahmevorrichtung (400) aus einem Pflanzaufsatz (33) einer Pflanzeinrichtung herausgenommene und von den Aufnahmebändern (56) der Entnahmevorrichtung (400) transportierten Pflanzen (1) von einem Einlaufbereich (28) der Vorrichtung (300, 500) aufgenommen werden.

4. Verfahren zum Ernten von Gemüse- oder Salatpflanzen mit einem Kopfbereich und einem Wurzelbereich, bei dem mit Hilfe einer Entnahmevorrichtung (400) nach einem der Ansprüche 1 oder 2 Pflanzen (1) aus einer Pflanzeinrichtung herausgehoben werden und mit Hilfe von Aufnahmebändern (56) zu einer Vorrichtung zum Ausrichten von Gemüse- bzw. Salatpflanzen transportiert werden.

## Claims

1. Device for the removal of vegetable or salad plants with a head area (1a) and a root area (1b) arranged in rows in a plant tray (33), having
- a holder for the plant tray (33),
- a screw arrangement (50) with a number of rotatably drivable screws (52), which corresponds more or less to the number of plants (1) capable of being picked up in a row of the plant tray (33),
- a moving suspension means (54) for the screw arrangement (50) to permit its spatial displacement,
whereby the screw arrangement (50) and the suspension means (54) are executed in such a way that the screws (52) of the screw arrangement (50) can be driven into a row of plants (1) that are present in a plant tray (33) on the holder,
**characterized in that**
two endless receiving belts (56) driven in a contra-rotating fashion for the onward transport of the plants (1) between them, which are arranged in such a way that they are able to take a row of plants (1) from the screw arrangement that are being carried by the screw arrangement (50), whereby the moving suspension means (54) is executed in such a way that it is capable of transporting the screw arrangement (50) from the area of the device in which the plants (1) are taken from a plant tray (33) to the receiving belts (56).

2. Device according to Claim 1, **characterized in that** the screw arrangement (50) is executed in such as way that the screws (52) can be driven at an angle into the plants, preferably into their root area.

3. System for harvesting vegetable or salad plants (1) with a head area (1a) and a root area (1b), comprising a removal device (400) according to one or other of Claims 1 or 2, **characterized in that** a device (300, 500) is arranged in such a way in relation to the removal device (400) that, with the help of the removal device (400), plants (1) taken from a plant tray (33) of a plant arrangement and transported by the receiving belts (56) of the removal device (400) are received by an inlet area (28) of the device (300, 500).

4. Method for harvesting vegetable or salad plants with a head area and a root area, **characterized in that**, with the help of a removal device (400) according to one or other of Claims 1 or 2, plants (1) are lifted from a plant arrangement and are transported with the help of receiving belts (56) to a device for the alignment of vegetable or salad plants.

## Revendications

1. Dispositif pour l'extraction de plantes de légumes ou de laitues disposées en rangées dans une pièce rapportée de plantes (33), avec une zone de tête (1a) et une zone de racines (1b) avec
- un organe de retenue pour la pièce rapportée de plantes (33),
- une installation de vissage (50) avec un nombre de vis (52) pouvant être entraînées en rotation dont le nombre correspond à peu près au plantes (1) pouvant être reçues dans une rangée de la pièce rapportée de plantes (33),
- une suspension mobile (54) pour l'installation de vissage (50) en vue de son déplacement spatial,
où l'installation de vissage (50) et la suspension (54) sont configurées de telle sorte que les vis (52) de l'installation de vissage (50) peuvent être entraînées dans une rangée de plantes (1) qui se trouvent dans une pièce rapportée de plantes (33) sur l'organe de retenue,
**caractérisé par**
deux bandes de réception sans fin (56) entraînées en sens opposé pour le transport ultérieur des plantes (1) entre elles, qui sont disposées de telle sorte qu'elles peuvent reprendre une rangée de plantes (1) qui sont supportées par l'installation de vissage (50), de celle-ci, où la suspension mobile (54) est réalisée de façon à pouvoir transporter l'installation de vissage (50) de la zone du dispositif, dans laquelle les plantes sont reprises d'une pièce rapportée de plantes (33), aux bandes de réception (56).

2. Dispositif selon la revendication 1, où l'installation de vissage (50) est réalisée de telle sorte que les vis (52) peuvent être entraînées en biais dans les plantes, de préférence dans la zone de leurs racines.

3. Système pour récolter des plantes de légumes et de laitues (1) avec une zone de tête (1b) et une zone de racines (1b), comprenant un dispositif d'extraction (400) selon l'une des revendications 1 ou 2, où un dispositif (300, 500) est disposé de telle sorte relativement au dispositif d'extraction (400) qu'à l'aide du dispositif d'extraction (400), des plantes (1) extraites d'une pièce rapportée de plantes (33) d'une installation de plantes et transportées par les bandes de réception (56) du dispositif d'extraction (400) sont reçues par une zone d'entrée (28) du dispositif (300, 500).

4. Procédé pour la récolte de plantes de légumes ou de laitues avec une zone de tête et une zone de racines, dans lequel, à l'aide d'un dispositif d'extraction (400) selon l'une des revendications 1 ou 2, des plantes (1) sont sorties d'une installation de plantes et sont transportées à l'aide de bandes de réception (56) à un dispositif d'orientation des plantes de légumes respectivement de laitues.
